# EUROPÄISCHE PATENTANMELDUNG

(11) **EP 2 201 906 A1**
(43) Veröffentlichungstag der Anmeldung: **30.06.2010**
(21) Anmeldenummer: 08172681.2
(22) Anmeldetag: 23.12.2008
(51) Int. Cl.: A61C 3/14, A61C 3/16

(54) **Dentalmedizinisches Greifwerkzeug**

(71) Anmelder: Hibrand Anstalt, 9491 Ruggell (LI)
(72) Erfinder: Bettega, Remo, 9444 Diepoldsau (CH)
(74) Vertreter: Winter, Brandl, Fürniss, Hübner, Röss, Kaiser, Polte - Partnerschaft

(57) **Zusammenfassung**

Ein dentalmedizinisches Greifwerkzeug (10) umfasst zwei Schenkel (12, 14), die über ein Gelenk (16) drehgelenkig miteinander verbunden sind, das die Schenkel (12, 14) in zwei einen Kopf bildende Branchen (12b, 14b) und zwei einen Griff bildende Griffarme (12a, 12b) unterteilt, wobei die Branchen (12b, 14b) jeweils an ihrem dem Gelenk (16) abgewandten Ende eine Wirkstelle (24) mit einer zum Fassen eines Zahnes geeigneten Kontur aufweisen.

## Beschreibung

Die vorliegende Erfindung betrifft ein dentalmedizinisches Greifwerkzeug zum Bergen zum Beispiel von im Rahmen einer Extraktion bereits gelockerten Zähnen, Wurzelresten, Fremdkörpern und Konkrementen (zusammenfassend nachfolgend als "Strukturen" bezeichnet) insbesondere im pharyngealen Bereich.

In der Zahnmedizin kann es beispielsweise vorkommen, dass eine Extraktionszange nicht optimal angesetzt und beim Versuch, den Zahn durch typische Luxationsbewegungen zu extrahieren, ein Fragment von diesem abgebrochen wird. Dann besteht die Gefahr, insbesondere wenn es sich um einen der Backenzähne (Prämolaren oder Molaren) handelt, dass das abgebrochene Fragment in den Rachen und schließlich entweder in die Speiseröhre oder, was erheblich kritischer ist, in die Luftröhre gleitet. Letzteres wird als "Aspiration" oder umgangssprachlich als "Verschlucken" bezeichnet und kann lebensbedrohlich sein.

Ein Bergen des Zahnfragments mit Hilfe einer Extraktionszange, die ein Dentalinstrument ist, das ausschließlich für das Extrahieren von Zähnen konzipiert und entwickelt wurde und wird, ist aufgrund ihrer funktionsadaptierten Form, insbesondere von Varianten für die Backenzähne, ungeeignet. Extraktionszangen sind aufgrund der hohen Kräfte, die sie ausüben müssen, mit sehr stabilen, gedrungenen Griffarmen und Branchen ausgestattet, wobei die Branchen, bedingt durch das Hebelgesetz, sehr kurz sind. Diese Form von Extraktionszangen und die dadurch bedingte Art und Weise, sie zu halten und zu betätigen, ist für eine filigrane feinmotorische Arbeit unter geringem Kräfteaufwand, wie sie zum Bergen der oben beispielhaft genannten Strukturen erforderlich ist, nicht geeignet. Aus praktischer Sicht ist eine Extraktionszange ferner dahingehend nachteilig, dass durch die Nähe der Wirkflächen zu dem als Gewerbe bezeichneten Gelenk oder Schloss der Zange der Blick auf die zu bergende Struktur behindert ist. Zwar ist das Ansetzen der Zange an einen Zahn unproblematisch, nicht jedoch das sichere Greifen und Halten von Strukturen, das sich in einem schwer zugänglichen Bereich der Mundhöhe befindet, zum Beispiel einen Bereich bukkal zu einem der Molaren.

Normalerweise wird für derartige feinmotorische Arbeiten auf eine Pinzette zurückgegriffen. Diese erlaubt jedoch eine nur unzureichende Kraftübertragung. Soll ein im Rahmen einer Extraktion zum Beispiel mit Hilfe einer Extraktionszange wie oben erwähnt oder eines klassischen "Beinschen Hebels" zwar schon gelockerter, jedoch noch ein wenig in seiner Alveole verankerter Zahn geborgen werden, ist eine herkömmliche Pinzette zu "schwach" und besitzt zudem eine ungünstige Form.

Der zur Bergung von Wurzelresten u. a. verwendete Krallen"hebel" erlaubt wiederum kein Fassen von Strukturen. Insbesondere besteht die Gefahr, dass durch einen solchen Krallenhebel gelöste Wurzelreste oder dergleichen, die nicht gleich nach oder beim Lösen gefasst werden, durch den reflektorischen Schluckakt im Rachenraum "verschwinden".

Es ist daher eine Aufgabe der vorliegenden Erfindung, ein dentalmedizinisches Greifwerkzeug zum Bergen zum Beispiel von gelockerten Zähnen, abgebrochenen Zahnteilen, Wurzelresten etc. bereitzustellen, das die oben genannten Nachteile überwindet.

Diese Aufgabe ist durch die Merkmale des Anspruchs 1 gelöst. Weitere vorteilhafte Weiterbildungen sind in den Unteransprüchen definiert.

Das erfindungsgemäße Greifwerkzeug vereint Merkmale / Elemente einer Schere, einer Extraktionszange und einer Pinzette. Es unterscheidet sich von bekannten Pinzettenformen insbesondere dahingehend, dass es über ein Gelenk verfügt und die Übertragung größerer Kräfte ermöglicht, hat mit diesen jedoch gemeinsam, dass es aufgrund seiner Gestalt und Proportionen ein im Vergleich zu einer Extraktionszange feinmotorischeres Arbeiten ohne Sichtbehinderung ermöglicht. Das erfindungsgemäße Greifwerkzeug wird ferner scherenartig betätigt, wodurch ein sicheres und ergonomisches Arbeiten gewährleistet ist.

Gemäß den Merkmalen des Anspruchs 1 der vorliegenden Erfindung umfasst ein dentalmedizinisches Greifwerkzeug zwei Schenkel, die über ein Gelenk drehgelenkig miteinander verbunden sind, das die Schenkel in zwei einen Kopf bildende Kopfarme, so genannte Branchen, und zwei einen Griff bildende Griffarme unterteilt, wobei die Branchen jeweils an ihrem dem Gelenk abgewandten Ende eine Wirkstelle mit einer zum Fassen eines Zahnes geeigneten Kontur aufweisen.

Erfindungsgemäß ist die Kontur jedoch nicht wie bei einer Extraktionszange für jeden Zahn "speziell" angepasst, was im Falle einer Extraktionszange der Fall sein muss, um ein Zersplittern des Zahnes bei der Extraktion zu vermeiden, sondern weist nur eine "grobe Anpassung" an eine "allgemeine Zahnform" auf, wodurch sie an Flexibilität gewinnt. Diese "grobe Anpassung" ist zulässig, da das erfindungsgemäße Greifwerkzeug dem Bergen und nicht dem Extrahieren dient, und zwar dem Bergen der oben beispielhaft genannten Strukturen, um zu verhindern, dass diese über den Rachen in die Luft- oder Speiseröhre gleiten.

Gemäß einer Ausgestaltung der vorliegenden Erfindung umfassen die Branchen jeweils einen gelenkseitigen Abschnitt und einen mit diesem verbundenen Wirkabschnitt, an dessen Ende die Wirkstelle angeordnet ist. Die Griffarme und die gelenkseitigen Abschnitte der Branchen erstrecken sich in einer zu der Drehachse senkrechten ersten Ebene, und die Wirkabschnitte sind um einen Winkel gegenüber der ersten Ebene geneigt.

Der Kopf des Greifwerkzeugs ist somit erfindungsgemäß aus der ersten Ebene heraus abgewinkelt. Dies hat zum Beispiel den Vorteil, dass bei ergonomisch-horizontaler Ausrichtung des Griffs ein oberer Molar von schräg unten bzw. ein unterer Molar von schräg oben erfasst werden kann. Die Abwinkelung des Kopfes ist nicht zuletzt an die Anatomie des menschlichen Gebisses angepasst; sie erlaubt zum Beispiel ein Übergreifen der vor einem gelockerten Molar liegenden Zähne. Der Winkel □ beträgt vorteilhafterweise 30°-45°.

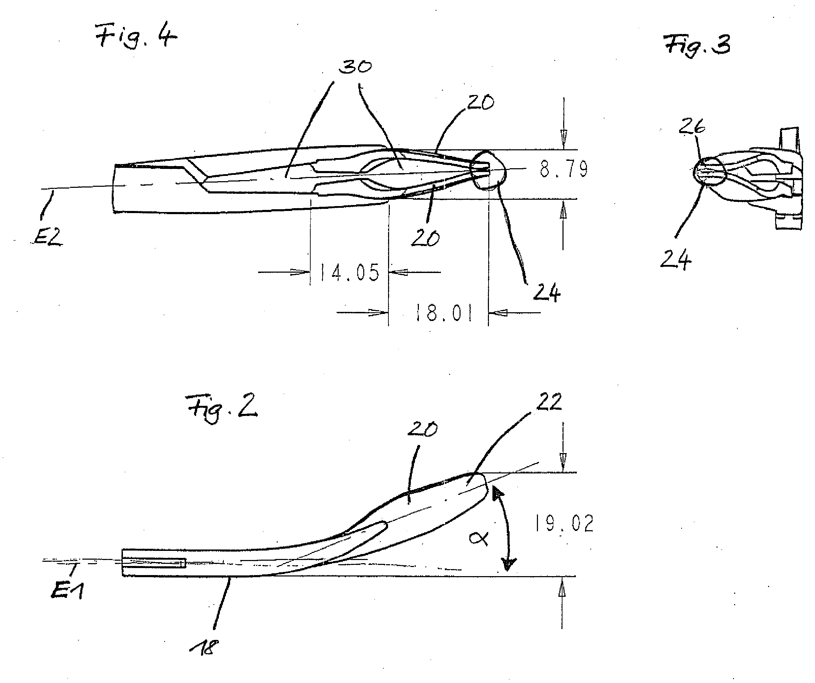

Gemäß einer weiteren Ausgestaltung der vorliegenden Erfindung umfassen die Wirkabschnitte jeweils einen plattenartigen Endabschnitt, der sich im Wesentlichen in einer zu der ersten Ebene senkrechten zweiten Ebene erstreckt und in Draufsicht auf die zweite Ebene (vgl. z. B. Fig. 2) die Form eines Trapezes annimmt, das sich in Richtung der Wirkstelle verjüngt. Wie es Fig. 2 zu entnehmen ist, die eine beispielhafte Ausführungsform zeigt, beträgt die Breite der Wirkstellen 1-2 mm. Vorzugsweise ist das Trapez ein gleichschenkliges Trapez.

Diese Konstruktion hat den Vorteil, dass bei ergonomischem Halten des erfindungsgemäßen Greifwerkzeugs die plattenartigen Endabschnitte nach bukkal bzw. palatinal des Zahns geschoben werden und die Wirkstellen den Zahn - eine Krone, die Wurzel, etc. - greifen können. Die Verjüngung sorgt dafür, dass ein gezieltes Greifen bzw. Umfassen ohne Kollision benachbarter Zähne möglich ist.

Gemäß einer weiteren Ausgestaltung der vorliegenden Erfindung sind die Wirkabschnitte zueinander gekrümmt.

Dies hat den Vorteil, dass Strukturen, z. B. Zähne, nicht nur anliegend, sondern auch umfassend bzw. ansatzweise schaufelartig untergriffen und nur von den Wirkstellen gefasst werden können.

Gemäß einer weiteren Ausgestaltung der vorliegenden Erfindung umschließen die Wirkstellen bei völligem Schluss des erfindungsgemäßen Greifwerkzeugs eine Lücke.

Wie oben dargelegt ist, wird beim Bergen von zum Beispiel einem Zahn dieser von dem erfindungsgemäßen Greifwerkzeug von schräg oben (im Falle eines Zahnes im Unterkiefer) umgriffen, und es soll verhindert werden, dass der Zahn in den Rachen abgleitet. Da bei völligem Schluss des erfindungsgemäßen Greifwerkzeugs die Wirkstellen eine Lücke umschließen, wird der Zahn zumindest teilweise umgriffen.

Gemäß weiteren Ausgestaltung der vorliegenden Erfindung muss zum Öffnen und Schließen des erfindungsgemäßen Greifwerkzeugs ein von Null verschiedenes Widerstandsmoment überwunden werden und sind die Wirkstellen diamantiert.

Beides dient dem optimalen Halt bzw. dazu, ein zu leichtes Abgleiten der Wirkstellen zu verhindern. Insbesondere wird das Widerstandsmoment nicht durch Federn oder dergleichen, sondern durch Reibung im Gelenk erzeugt.

Gemäß einer weiteren Ausgestaltung der vorliegenden Erfindung weisen die Griffarme jeweils an ihrem dem Gelenk abgewandten Endabschnitt ein Auge auf.

Durch Einführen von zwei Fingern in diese Augen kann das erfindungsgemäße Greifwerkzeug sicher und gleichzeitig sehr beweglich gehalten werden. Insbesondere ist hierdurch ein Verdrehen bzw. Verkippen des erfindungsgemäßen Greifwerkzeugs um seine Längsachse verhindert. Ein Abrutschen an der zu bergenden Struktur und damit ein "Wegspringen" der Struktur kann somit weitestgehend verhindert und ihre Bergung kontrolliert ausgeführt werden.

Gemäß einer weiteren Ausgestaltung der vorliegenden Erfindung ist der Querschnitt von jedem der Griffarme zwischen dem Gelenk und dem Auge allgemein rechteckig.

Die rechteckige Querschnittsform besitzt gegenüber einer runden ein größeres Widerstandsmoment, so dass bei gleicher Nennbelastung das erfindungsgemäße Greifwerkzeug feingliedriger ausgebildet werden kann.

Gemäß einer weiteren Ausgestaltung der vorliegenden Erfindung durchdringt im Bereich des Gelenks eines der beiden Schenkel den weiteren Schenkel.

Gegenüber einer Konstruktion, bei der die beiden Schenkel mit Hilfe des Gelenks nebeneinander liegend gelenkig verbunden sind, ist durch die erfindungsgemäße Auslegung ein Einklemmen von Gewebe weitestgehend verhindert.

Gemäß einer weiteren Ausgestaltung der vorliegenden Erfindung beträgt das Verhältnis der Länge des Kopfes zu der Länge des Griffes etwa 2:1.

Dies hat, wie es oben ausgeführt ist, den Vorteil gegenüber zum Beispiel einer Extraktionszange, dass die Sicht auf die Struktur nicht versperrt wird, und zwar nicht nur durch das Instrument selbst, sondern auch durch die Hand, die sich bei der Handhabung einer Extraktionszange bei der Extraktion eines Molars teilweise in den Mund erstreckt.

Die obigen und weitere Aufgaben, Eigenschaften und Vorteile der vorliegenden Erfindung sind aus der nachfolgenden detaillierten Beschreibung, die unter Bezugnahme auf die beigefügte Zeichnung gemacht wurde, deutlicher ersichtlich. In den Zeichnungen zeigen:
Fig. 1A schematisch eine perspektivische Ansicht eines dentalmedizinischen Greifwerkzeugs gemäß einer ersten Ausführungsform der vorliegenden Erfindung, und Fig. 1B einen vergrößerten Ausschnitt des vorderen Abschnitts des Greifwerkzeugs von Fig. 1A;
Fign. 2 bis 4 schematisch eine Draufsicht, eine Vorderansicht bzw. eine Seitenansicht des vorderen Abschnitts des dentalmedizinischen Greifwerkzeugs von Fig. 1A.
Fig. 5A schematisch eine perspektivische Ansicht eines dentalmedizinischen Greifwerkzeugs gemäß einer zweiten Ausführungsform der vorliegenden Erfindung, und Fig. 5B einen vergrößerten Ausschnitt des vorderen Abschnitts des Greifwerkzeugs von Fig. 5A; und
Fign. 6 bis 8 schematisch eine Schnittansicht entlang der Linie A-A von Fig. 7, eine Vorderansicht bzw. eine Seitenansicht des vorderen Abschnitts des Greifwerkzeugs von Fig. 5A.

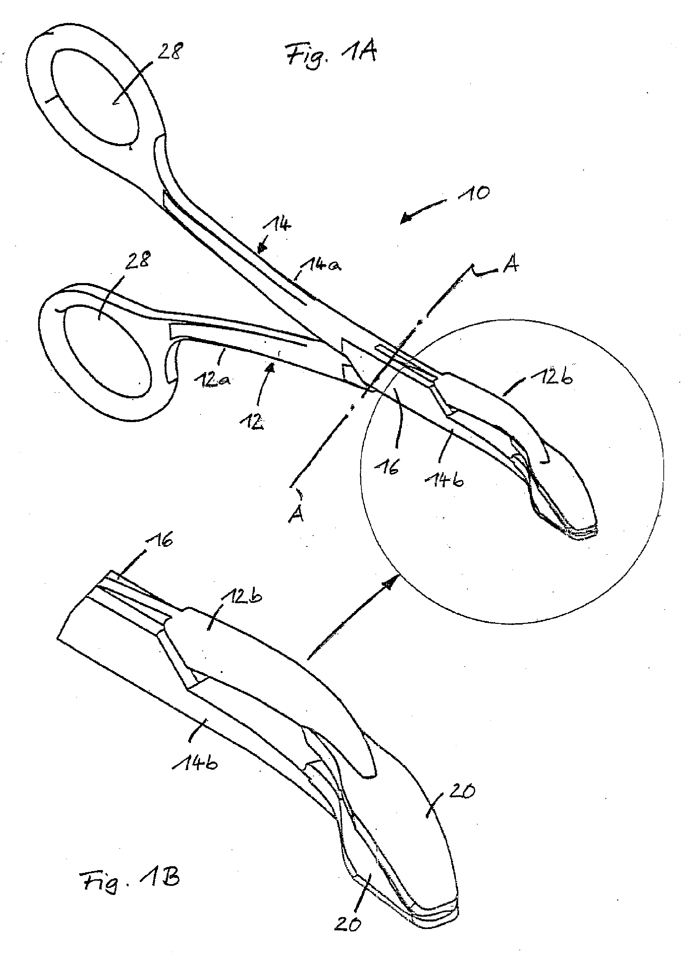

Wie es in Fig. 1A gezeigt ist, umfasst ein dentalmedizinisches Greifwerkzeug 10 gemäß der ersten Ausführungsform einen ersten Schenkel 12 und einen zweiten Schenkel 14, die über ein Gelenk (Gewerbe) 16 drehgelenkig miteinander verbunden sind. Das Gelenk 16 erlaubt eine Schwenk- bzw. Drehbewegung der Schenkel 12, 14 relativ zueinander um eine Drehachse A-A. Jeder der Schenkel 12, 14 ist durch das Gelenk 16 in einen Griffarm 12a bzw. 14a, die zusammen einen Griff 12a, 14a bilden, und eine Branche 12b bzw. 14b, die zusammen einen Kopf 12b, 14b bilden, unterteilt.

Wie es in Fig. 2 gezeigt ist, umfassen die Branchen 12b, 14b jeweils einen gelenkseitigen Abschnitt 18 und einen diesem gegenüber um einen Winkel □ abgewinkelten Wirkabschnitt 20. Die Griffabschnitte 12a und 14a sowie die gelenkseitigen Abschnitte 18 erstrecken sich in einer ersten Ebene E1, die senkrecht zu der Drehachse A-A liegt. Jeder der Wirkabschnitte 20 ist plattenförmig ausgebildet und umfasst einen in Fig. 2 in der Draufsicht gezeigten Endabschnitt 22 in Form eines allgemein sich zu seinem Ende hin verjüngenden, im Wesentlichen gleichförmigen und an den Ecken abgerundeten Trapezes. Die plattenförmigen Endabschnitte 22 sind zueinander gekrümmt, wie es am besten in den Fign. 3 und 4 gezeigt ist, so dass sich in vollständig geschlossenem Zustand des erfindungsgemäßen Greifwerkzeugs die Branchen 12b, 14b nur an ihren Wirkstellen 24 berühren.

Wie es in Fig. 1B und Fig. 4 am deutlichsten gezeigt ist, sind der gelenkseitige Abschnitt 18 und der Wirkabschnitt 20 jeder der Branchen 12b, 14b so miteinander verbunden, dass die beiden gelenkseitigen Abschnitte 18 die jeweiligen Wirkabschnitte 20 von außen überlappen.

In vollständig geschlossenem Zustand des erfindungsgemäßen Greifwerkzeugs 10 berühren sich die Wirkstellen 24 nur in einem der ersten Ebene E1 zugewandten Abschnitt und einem der ersten Ebene E1 abgewandten Abschnitt, wie es in Fig. 3 gezeigt ist. Mit anderen Worten, die Wirkstellen 24 umschließen in einer Vorderansicht des Kopfes betrachtet eine Lücke 26, wo sie sich bei vollständig geschlossenem Greifwerkzeug nicht berühren. Durch die Lücke 26 ist eine Kontaktfläche zwischen den Wirkstellen 24 und einer zu bergenden Struktur, insbesondere ein gelockerter Zahn, vergrößert. Die Lücke 26 ermöglicht somit ein wenigstens teilweises Umgreifen der Struktur.

An ihren dem Gelenk 16 entgegengesetzten Endabschnitten weisen die Griffabschnitte 12a, 14a jeweils ein Auge 28 auf, so dass sich insgesamt eine Art Scherengriff ergibt. Wie es in Fig. 1A gezeigt ist, ist das Gelenk 16 so ausgelegt, dass der Schenkel 12 den Schenkel 14 in diesem Bereich durchdringt, und die Abschnitte der Schenkel 12, 14, die das Gelenk 16 bilden, sowie die Griffabschnitte in den Bereichen zwischen dem Gelenk 16 und den Augen 28 sind im Querschnitt allgemein rechteckig ausgebildet, wobei sich die Längsachsen der Rechtecke in der ersten Ebene E1 erstrecken. Rechts in Fig. 1A neben dem Gelenk 16 ist die allgemeine Ausrichtung aus der ersten Ebene E1 in eine zu der erste Ebene E1 senkrechte Ebene E2 "gekippt", in der die Achse A-A liegt und sich die beiden Wirkstellen 24 berühren (vgl. Fig. 4).

Erfindungsgemäß ist das dentalmedizinische Greifwerkzeug in unterschiedlichen Größen ausgeführt. Die in den Figuren gezeigten Abmessungen sind als Richtwerte zu verstehen. Unabhängig von der jeweiligen Größe ist das erfindungsgemäße Greifwerkzeug dadurch ausgezeichnet, dass das Verhältnis zwischen der Länge des Kopfes und der Länge des Griffes etwa 1:2 beträgt.

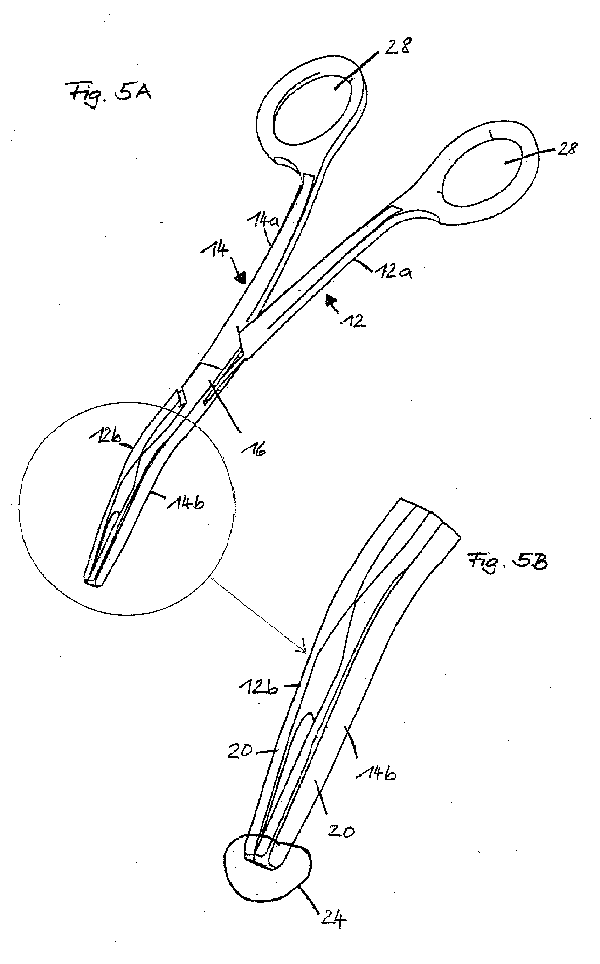

Die Fign. 5A bis 8 zeigen eine zweite Ausführungsform der vorliegenden Erfindung, wobei Elemente, die in beiden Ausführungsformen äquivalent sind, mit gleichen Bezugszeichen versehen sind.

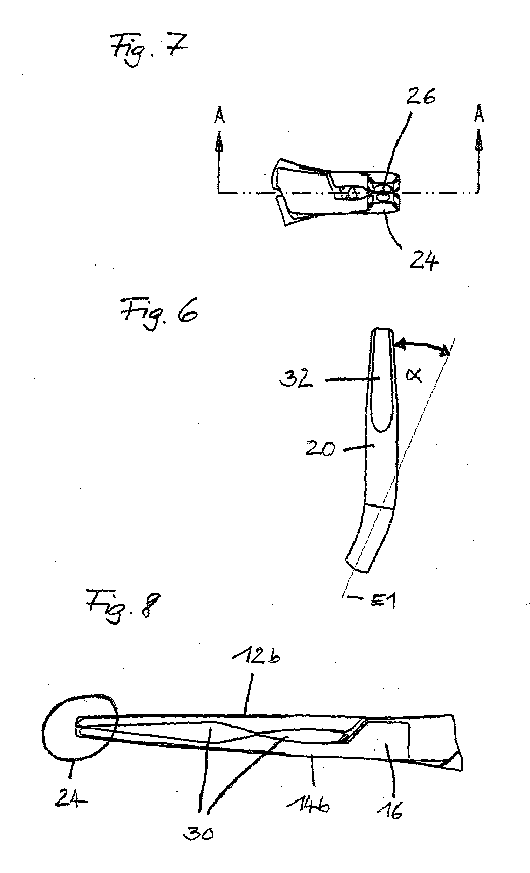

Im Gegensatz zu dem Greifwerkzeug gemäß der ersten Ausführungsform, bei dem der gelenkseitige Abschnitt 18 und der plattenförmige Endabschnitt 22 eines jeden Schenkels 12 und 14 als zwei miteinander verbundene Elemente ausgebildet sind, sind der gelenkseitige Abschnitt 18 und der plattenförmige Endabschnitt 22 gemäß der zweiten Ausführungsform einteilig ausgebildet. Ebenso wie gemäß der ersten Ausführungsform sind in der Seitenansicht (vgl. Fign. 4 und 8) des vollständig geschlossenen Greifwerkzeugs durch die Branchen 12b und 14b zwei längliche, allgemein flach-elliptische Öffnungen 30 gebildet, die miteinander verbunden sind, so dass in vollständig geschlossenem Zustand des Greifwerkzeugs die Branchen 12b und 14b nur an den jeweiligen Wirkstellen 24 Kontakt haben.

Ferner ist die Lücke 26 in Form von zwei rinnenförmigen Ausnehmungen 32 in den Wirkabschnitten 20 entlang jeweiliger Längsachse der Wirkabschnitte 20 fortgesetzt.

Obgleich die vorliegende Erfindung bezüglich der bevorzugten Ausführungsformen offenbart worden ist, um ein besseres Verständnis von diesen zu ermöglichen, sollte wahrgenommen werden, dass die Erfindung auf verschiedene Weisen verwirklicht werden kann, ohne den Umfang der Erfindung zu verlassen. Deshalb sollte die Erfindung derart verstanden werden, dass sie alle möglichen Ausführungsformen und Ausgestaltungen zu den gezeigten Ausführungsformen beinhaltet, die realisiert werden können, ohne den Umfang der Erfindung zu verlassen, wie er in den beigefügten Ansprüchen dargelegt ist.

### Bezugszeichenliste

- 10: Dentalmedizinisches Greifwerkzeug
- 12: Schenkel
- 12a: Griffarm von 12
- 12b: Branche von 12
- 14: Schenkel
- 14a: Griffarm von 14
- 14b: Branche von 14
- 16: Gelenk
- 18: Gelenkseitiger Abschnitt von 12b, 14b
- 20: Wirkabschnitt
- 22: Endabschnitt
- 24: Wirkstellen
- 26: Lücke
- 28: Auge
- 30: Öffnungen
- 32: Ausnehmung

- E1: Erste Ebene
- E2: Zweite Ebene
- □: Winkel zwischen 20 und E1
- A-A': Drehachse

## Patentansprüche

1. Dentalmedizinisches Greifwerkzeug (10) mit zwei Schenkeln (12, 14), die über ein Gelenk (16) drehgelenkig miteinander verbunden sind, das die Schenkel (12, 14) in zwei einen Kopf bildende Branchen (12b, 14b) und zwei einen Griff bildende Griffarme (12a, 12b) unterteilt, wobei die Branchen (12b, 14b) jeweils an ihrem dem Gelenk (16) abgewandten Ende eine Wirkstelle (24) mit einer zum Fassen eines Zahnes geeigneten Kontur aufweisen.

2. Greifwerkzeug (10) nach Anspruch 1, **dadurch gekennzeichnet, dass:**
- die Branchen (12b, 14b) jeweils einen gelenkseitigen Abschnitt (18) und einen mit diesem verbundenen Wirkabschnitt (20), an dessen Ende die Wirkstelle (24) angeordnet ist, umfassen; und
- sich die Griffarme (12a, 14a) und die gelenkseitigen Abschnitte (18) der Branchen (12b, 14b) in einer zu der Drehachse (A-A') senkrechten erste Ebene (E1) erstrecken und die Wirkabschnitte (20) um einen Winkel (α) gegenüber der ersten Ebene (E1) geneigt sind.

3. Greifwerkzeug (10) nach Anspruch 2, **dadurch gekennzeichnet, dass** der Winkel (α) 30° - 45° beträgt.

4. Greifwerkzeug (10) nach Anspruch 2 oder 3, **dadurch gekennzeichnet, dass** die Wirkabschnitte (20) jeweils einen plattenartigen Endabschnitt (22) umfassen, der sich im Wesentlichen in einer zu der ersten Ebene (E1) senkrechten zweiten Ebene (E2) erstreckt und in Draufsicht auf die zweite Ebene (E2) die Form eines Trapezes annimmt, das sich in Richtung der Wirkstelle (24) verjüngt.

5. Greifwerkzeug (10) einem der Ansprüche 2 bis 4, **dadurch gekennzeichnet, dass** die Wirkabschnitte (20) zueinander gekrümmt sind.

6. Greifwerkzeug (10) nach einem der Ansprüche 2 bis 5, **dadurch gekennzeichnet, dass** die Wirkstellen (24) in einer Vorderansicht betrachtet bei völligem Schluss des Greifwerkzeugs (10) eine Lücke (26) umschließen.

7. Greifwerkzeug (10) nach einem der Ansprüche 1 bis 6, **dadurch gekennzeichnet, dass** zum Öffnen und Schließen des Greifwerkzeugs (10) ein von Null verschiedenes Widerstandsmoment überwunden werden muss.

8. Greifwerkzeug (10) nach einem der Ansprüche 1 bis 7, **dadurch gekennzeichnet, dass** die Wirkstellen (24) diamantiert sind.

9. Greifwerkzeug (10) nach einem der Ansprüche 1 bis 8, **dadurch gekennzeichnet, dass** die Griffarme (12a, 14a) jeweils an ihrem dem Gelenk (16) abgewandten Endabschnitt ein Auge (28) aufweisen.

10. Greifwerkzeug (10) nach Anspruch 9, **dadurch gekennzeichnet, dass** der Querschnitt von jedem der Griffarme (12a, 14a) zwischen dem Gelenk (16) und dem Auge (28) allgemein rechteckig ist.

11. Greifwerkzeug (10) nach einem der Ansprüche 1 bis 10, **dadurch gekennzeichnet, dass** im Bereich des Gelenks (16) einer der beiden Schenkel (12) den weiteren Schenkel (14) durchdringt.

12. Greifwerkzeug (10) nach einem der Ansprüche 1 bis 11, **dadurch gekennzeichnet, dass** das Verhältnis der Länge des Kopfes (12b, 14b) zu der Länge des Griffes (12a, 14a) etwa 2:1 beträgt.
